# EUROPÄISCHE PATENTSCHRIFT

(11) **EP 2 878 430 B1**
(45) Veröffentlichungstag und Bekanntmachung des Hinweises auf die Patenterteilung: **27.06.2018**
(21) Anmeldenummer: 14192837.4
(22) Anmeldetag: 12.11.2014
(51) Int. Cl.: B29C 65/20, B29C 65/30, H05B 3/30, B29C 65/78, B29L 23/00

(54) **Kunststoffrohr-Stumpfschweißmaschine, Heizelement hierfür sowie Verfahren zur Herstellung eines Plattenheizkörpers**
Plastic pipe butt welding machine, heating element therefor and method for producing a heating plate
Machine de soudage bout à bout de tuyaux en plastique, élément chauffant associé et procédé de fabrication d'une plaque chauffante

(30) Priorität: 29.11.2013 DE 102013224612
(43) Veröffentlichungstag der Anmeldung: 03.06.2015
(73) Patentinhaber: WIDOS Wilhelm Dommer Söhne GmbH, 71254 Ditzingen (DE)
(72) Erfinder: Dommer, Martin, 71254 Ditzingen (DE); Schmitt, Michael, 97262 Hausen bei Würzburg (DE)
(74) Vertreter: Patentanwälte Ruff, Wilhelm, Beier, Dauster & Partner mbB

(56) Entgegenhaltungen:
- EP-A1- 2 829 382
- DE-A1- 19 807 142

## Beschreibung

Die Erfindung betrifft eine Kunststoffrohr-Stumpfschweißmaschine mit wenigstens einem Heizelement sowie ein Heizelement für eine Kunststoffrohr-Stumpfschweißmaschine mit einem Plattenheizkörper, in dem wenigstens eine elektrische Heizquelle integriert ist, wobei der Plattenheizkörper eine Metallschaumstruktur aufweist, in die die wenigstens eine elektrische Heizquelle wärmeleitend eingebettet ist, und wobei die Metallschaumstruktur an ihren gegenüberliegenden Grundflächen durch jeweils eine ebene Metallplatte flankiert ist, die materialschlüssig mit der Metallschaumstruktur verbunden ist.

Aus der nicht vorveröffentlichten EP 2 829 382 A1 ist ein Heizelement für eine Platten-Stumpfschweißmaschine bekannt, wobei das Heizelement als Sandwichkörper ausgebildet ist. Der Sandwichkörper weist eine Metallschaumschicht auf, die auf gegenüberliegenden Seitenflächen mit jeweils einer Massivmetallschicht bedeckt ist. In der Metallschaumschicht ist wenigstens ein Hohlraum zum Einsetzen einer Heizquelle vorgesehen.

Aus der DE 10 2012 207 098 A1 und DE 198 07142 A1 sind Vorrichtungen zum Stumpfschweißen von Kunststoffrohren bekannt. Die bekannten Vorrichtungen weisen Spannwerkzeuge zum koaxialen Halten von zwei miteinander zu verschweißenden Kunststoffrohren auf. Zudem ist die Schweißvorrichtung mit einem plattenförmigen Heizelement versehen, dessen Heizplattenflächen dazu dienen, die Stirnflächen der einander zugewandten Rohrenden zu plastifizieren, um anschließend durch Zusammendrücken der Rohrenden der beiden Kunststoffrohre die gewünschte Stumpfverschweißung zu erzielen. Vor dem Zusammenpressen der Rohrenden wird das plattenförmige Heizelement wieder entfernt. Das aus der DE 198 07142 A1 bekannte plattenförmige Heizelement ist mit einer integrierten elektrischen Heizquelle, insbesondere in Form von Heizpatronen, versehen.

Aufgabe der Erfindung ist es, eine Kunststoffrohr-Stumpfschweißmaschine und ein Heizelement der eingangs genannten Art zu schaffen, die in ihrer Energieeffizienz und ihrer ökologischen Einstufung gegenüber dem Stand der Technik verbessert sind.

Diese Aufgabe wird für die Kunststoffrohr-Stumpfschweißmaschine durch die Merkmale des Patentanspruchs 1 gelöst.

Für das Heizelement wird die Aufgabe durch die Merkmale des Patentanspruchs 2 gelöst. Durch die Erfindung ist gewährleistet, dass die Außenseiten des Heizelements bei einem Erhitzen und Plastifizieren der Stirnflächen der entsprechenden Rohrenden der Kunststoffrohre nicht an diesen Stirnflächen haften bleiben und dass keine Beschädigung der Rohrenden durch entsprechend am Heizelement anhaftendes Kunststoffmaterial entsteht. Zwischen der Folienbespannung und der Oberfläche der zugeordneten Metallplatte des Heizelements ergibt sich ein Luftpolster, das isolierende sowie wärmespeichernde Wirkung für die Heizflächen des Heizelements hat. Dies bedeutet, dass im Betrieb des Heizelements weniger Hitze von den Heizflächen des Plattenheizkörpers an die Umgebung abgegeben wird. Diese Ausgestaltung bildet einen weiteren Beitrag zum Sparen von elektrischer Heizenergie. Die Folienbespannung heizt sich über die benachbarte Heizfläche und den zwischenliegenden Luftspalt auf eine entsprechende Plastifizierungstemperatur für die jeweilige Stirnfläche des zu verschweißenden Rohrendes auf. Die Folienbespannung weist auf ihrer dem Rohrende zugewandten Außenseite eine Antihaft-Fläche auf, so dass sie nicht an der Stirnfläche des jeweils zugeordneten Rohrendes anhaften kann.

Durch die Metallschaumstruktur ergibt sich eine erhebliche Gewichtsreduzierung für den Plattenheizkörper und damit zwangsläufig für das Heizelement, so dass das Heizelement manuell durch eine Bedienperson gehandhabt werden kann. Durch die Metallschaumstruktur wird zum einen für das Aufheizen des Heizelements weniger Energie benötigt als beim Stand der Technik. Zum anderen wird auch weniger Energie benötigt, um das Heizelement auf entsprechender Betriebstemperatur zu halten. Als Metallschaumstruktur ist vorzugsweise eine Schaumstruktur aus einer Aluminiumlegierung vorgesehen. Es ist auch möglich, die Metallschaumstruktur aus anderen Metalllegierungen herzustellen. Das erfindungsgemäße Heizelement wird in vorteilhafter Weise bei Kunststoffrohr-Stumpfschweißmaschinen eingesetzt, bei denen zur Verschweißung der Rohrenden benachbarter Kunststoffrohre die Stirnflächen der Rohrenden erhitzt und plastifiziert werden. Anschließend werden die Rohrenden der beiden Kunststoffrohre gegeneinander gepresst, wodurch sich aufgrund der plastifizierten Stirnflächen eine umlaufende Verschweißung der beiden Rohrenden und demzufolge eine Verbindung der beiden Kunststoffrohre ergibt. Die beiden Metallplatten sind über ihre gesamte Fläche flächig und gleichmäßig mit der entsprechend zugewandten Grundfläche der Metallschaumstruktur verbunden, indem diese bei der Herstellung mit der Metallschaumstruktur vernetzt werden.

In Ausgestaltung der Erfindung weisen die Metallschaumstruktur sowie die beiden die Metallschaumstruktur flankierenden Metallplatten zueinander identische Grundflächen auf und fluchten in Richtung einer Dicke des Plattenheizkörpers miteinander. Dadurch ergibt sich ein einheitlicher Plattenheizkörper mit bündig zueinander abschließenden Rändern der Metallschaumstruktur und der beidseitig angefügten Metallplatten.

In weiterer Ausgestaltung der Erfindung umfasst die elektrische Heizquelle wenigstens einen Rohrheizkörper oder wenigstens eine Heizpatrone, die formschlüssig und/oder materialschlüssig von der Metallschaumstruktur umschlossen sind. Dadurch ergibt sich zwischen der elektrischen Heizquelle und der Metallschaumstruktur eine gute Wärmeleitung, die eine energiesparende Aufheizung der Metallschaumstruktur durch die elektrische Heizquelle ermöglicht. Der elektrische Rohrheizkörper kann eine oder mehrere Rohrheizschlangen aufweisen. Vorzugsweise sind mehrere, über die Grundfläche der Metallschaumstruktur verteilte Heizpatronen vorgesehen. Die elektrische Heizquelle ist vorzugsweise derart gestaltet, dass sich über die gesamte Fläche der Metallschaumstruktur eine gleichmäßige Aufheizung erzielen lässt.

In weiterer Ausgestaltung der Erfindung umfasst der Rohrheizkörper wenigstens eine Rohrheizschlange, die in einer parallel zwischen den Metallplatten erstreckten Ebene in der Metallschaumstruktur verläuft. Dies ermöglicht eine gleichmäßige und energiesparende Aufheizung der Metallschaumstruktur.

In weiterer Ausgestaltung der Erfindung ragt in die Metallschaumstruktur wenigstens ein Temperatursensor hinein. Dieser dient dazu, die Energiezufuhr zu der elektrischen Heizquelle zu steuern oder zu regeln.

Aufgabe der Erfindung ist es auch, ein Verfahren der eingangs genannten Art zu schaffen, das mit einfachen Mitteln die Herstellung eines besonders energieeffizienten Heizelements ermöglicht.

Diese Aufgabe wird durch die Merkmale des Patentanspruchs 8 gelöst. In vorteilhafter Weise wird für die Herstellung des Plattenheizkörpers nach dem Spalten der Einheit aus Metallschaumstruktur und Metallplatten, d.h. nach dem Spalten des metallischen Rohkörpers, die elektrische Heizquelle zwischen die beiden Hälften des Rohkörpers eingelegt und mit Strom beaufschlagt. Dabei wird die elektrische Heizquelle vorzugsweise auf eine hohe Temperatur aufgeheizt. Gleichzeitig werden die beiden Hälften, die mit ihrer offenen Metallschaumstruktur an den Außenkonturen der elektrischen Heizquelle anliegen, von den gegenüberliegenden Metallplatten her mit Druck und mit Temperatur beaufschlagt. Dabei werden vorzugsweise die Metallplatten von außen her mit einer Temperatur von ca. 400°C beheizt. Falls die Metallschaumstruktur durch eine Aluminiumlegierung gebildet wird, wird die eingelegte Heizquelle vorteilhaft auf eine Temperatur von etwa 600°C aufgeheizt. Die Metallschaumstruktur erhält hierdurch im Bereich der Außenkonturen der elektrischen Heizquelle und im Bereich der Trennflächen der beiden Hälften eine teigige Konsistenz, wodurch sie an den Außenkonturen der elektrischen Heizquelle, insbesondere an einem entsprechenden Rohrheizkörper, anschmilzt und sich um diese herumschmiegt. Gleichzeitig wird die Metallschaumstruktur aufgrund des von den gegenüberliegenden Seiten her ausgeübten Drucks in unmittelbarer Umgebung der Außenkonturen der elektrischen Heizquelle verdichtet, wodurch sich zwischen den Außenkonturen der Heizquelle und der Metallschaumstruktur eine besonders gute Wärmeleitung ergibt. Außerdem verbinden sich die einander zugewandten Flächen der offenen Metallschaumstrukturen der beiden Hälften über die gesamte Grundfläche des Heizelements materialschlüssig miteinander, so dass sich nach dem Erkalten ein homogener Plattenheizkörper mit integrierter elektrischer Heizquelle ergibt.

Die Herstellung des Rohkörpers, d.h. die Verbindung der Metallplatten mit der Metallschaumstruktur, erfolgt vorzugsweise in einem einstufigen Herstellungsprozess, wobei das Ausgangsmaterial für die Metallschaumstruktur mit einem Treibmittel versehen wird, durch das die entsprechende Schaumstruktur entsteht. Die außenliegenden Metallplatten weisen kein Treibmittel auf. Die Schaumstruktur schmiegt sich bei der Herstellung zwangsläufig materialschlüssig an die außenliegenden Metallplatten an, die vorteilhaft aus der gleichen Metalllegierung bestehen wie die Metallschaumstruktur.

In Ausgestaltung des Verfahrens wird ein umlaufender Randbereich der Metallschaumstruktur wasserdicht versiegelt. Hierdurch wird gewährleistet, dass das Innere der Metallschaumstruktur gegen das Eindringen von Feuchtigkeit und Wasser versiegelt ist, so dass keine Korrosion auftreten kann.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung eine Ausführungsform einer erfindungsgemäßen Kunststoffrohr-Stumpfschweißmaschine mit einer Ausführungsform eines erfindungsgemäßen Heizelements,
- Fig. 2: das Heizelement nach Fig. 1,
- Fig. 3: in schematischer, vergrößerter Querschnittsdarstellung längs der Schnittlinie III-III das Heizelement nach Fig. 2,

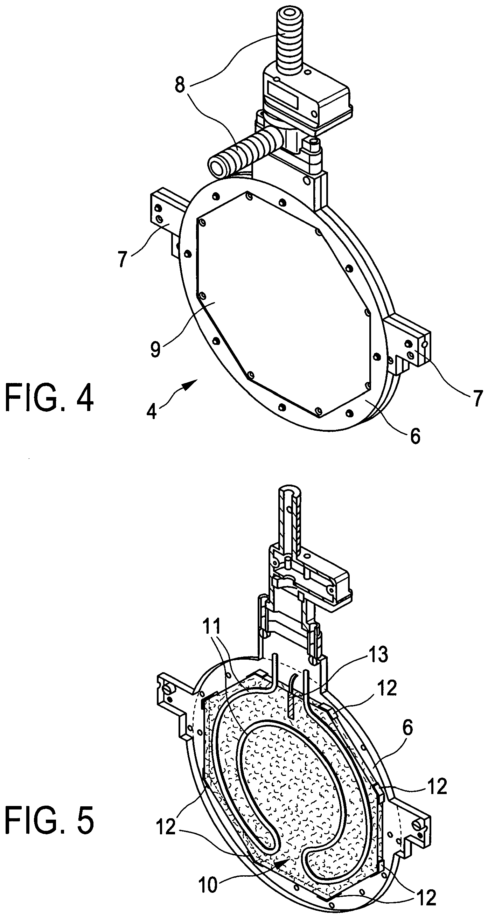

- Fig. 4: eine Darstellung des Heizelements ähnlich Fig. 2, jedoch ohne unsichtbare Konturen,
- Fig. 5: das Heizelement nach den Fig. 2 bis 4 in perspektivischer, längsgeschnittener Darstellung,
- Fig. 6 bis 9: Darstellungen verschiedener Verfahrensschritte zur Herstellung eines Plattenheizkörpers des Heizelements nach den Fig. 2 bis 5 und
- Fig. 10: in einem Querschnitt entlang der Schnittlinie X-X in Fig. 8 den fertiggestellten Plattenheizkörper.

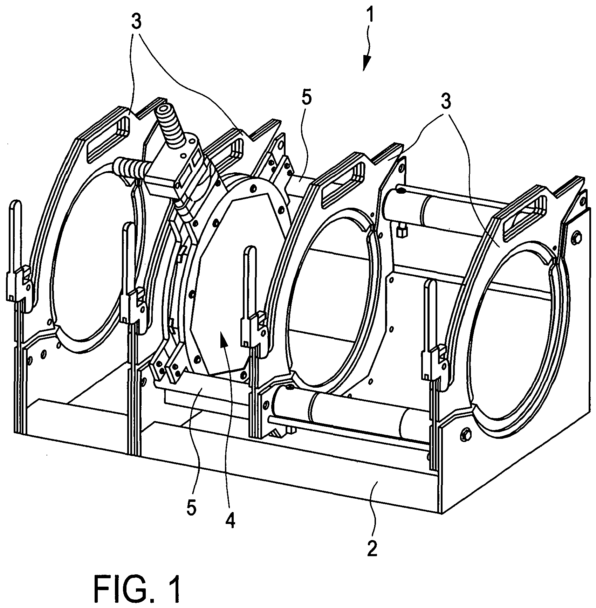

Eine Schweißmaschine 1 nach Fig. 1 dient zum Stumpfschweißen von Kunststoffrohren, wobei jeweils zwei Kunststoffrohre mit ihren Rohrenden koaxial fluchtend zueinander ausgerichtet werden. Anschließend werden die Stirnflächen der benachbarten Rohrenden erhitzt und plastifiziert. Dann werden die Rohrenden gegeneinander gefügt, wodurch diese stumpf aneinanderstoßen und im Bereich der plastifizierten Stirnflächen umlaufend miteinander verschweißt werden.

Die Kunststoffrohr-Stumpfschweißmaschine 1 weist in grundsätzlich bekannter Weise ein Traggestell 2 auf, an dem mehrere Spannwerkzeuge 3 zum Aufnehmen und Fixieren der Kunststoffrohre gehalten sind. Die in Fig. 1 links dargestellten beiden Spannwerkzeuge sind am Traggestell 2 stationär angeordnet. Die beiden rechten Spannwerkzeuge 3 können mithilfe von Hydraulikzylindern axial verlagert werden, um das Aufeinanderzuführen der Kunststoffrohre zu ermöglichen.

Zur Plastifizierung der Stirnenden der Rohrenden ist ein Heizelement 4 vorgesehen, das manuell von dem Traggestell 2 entfernt werden kann. Zwei axial verlaufende Holme 5 des Traggestells 2 dienen zur Halterung und Positionierung des Heizelements 4. Hierzu weist das Heizelement 4 auf gegenüberliegenden Seiten entsprechende Stützbacken 7 auf, die zur Abstützung des Heizelements 4 auf den Holmen 5 dienen.

Das Heizelement 4 weist einen Aufnahmerahmen 6 auf, in dem ein Plattenheizkörper 10 gehalten ist, der nachfolgend näher beschrieben wird. Der Plattenheizkörper 10 umfasst eine elektrische Heizquelle in Form einer Rohrheizschlange 11, die in dem Plattenheizkörper 10 eingebettet ist. Ebenfalls in den Plattenheizkörper 10 integriert ist ein Temperatursensor 13. Der Plattenheizkörper 10 weist eine gleichmäßig achteckige Grundfläche auf. Der Plattenheizkörper 10 wird innerhalb des Rahmens 6 durch mehrere Stütznasen 12 im Bereich der Ecken des Plattenheizkörpers 10 gehalten.

Der Plattenheizkörper 10 weist an seinen gegenüberliegenden Außenseiten jeweils eine achteckige Metallplatte M auf, die aus einer Aluminiumlegierung hergestellt ist. Eine Grundstruktur des Plattenheizkörpers 10 zwischen den einander gegenüberliegenden Metallplatten M wird durch eine Metallschaumstruktur S gebildet, die die elektrische Heizquelle in Form der Rohrheizschlange 11 in nachfolgend näher beschriebener Weise umschließt. Auch die Metallschaumstruktur S ist aus einer Aluminiumlegierung hergestellt.

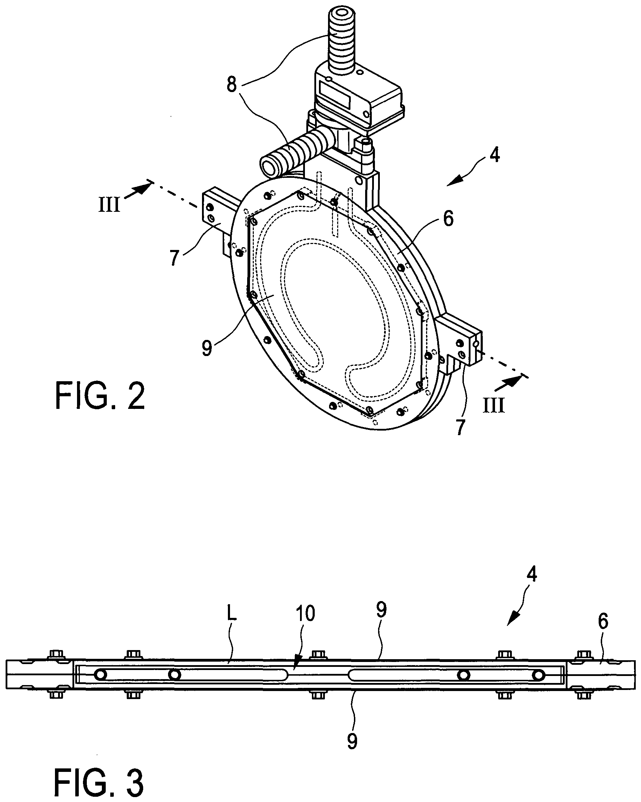

Das Heizelement 4 ist zudem beidseitig mit jeweils einer Folienbespannung 9 versehen, die in dem Rahmen 6 aufgespannt ist. Die Folienbespannung 9 ist gemäß Fig. 3 in geringem, parallelem Abstand zur jeweiligen Metallplatte M des Plattenheizkörpers 10 angeordnet. Hierdurch ergibt sich zwischen einer Innenseite der jeweiligen Folienbespannung 9 und einer entsprechenden Oberfläche der jeweiligen Metallplatte M ein über die gesamte Oberfläche der jeweiligen Metallplatte M erstreckter Luftspalt L, so dass sich zwischen der Folienbespannung 9 und dem Plattenheizkörper 10 auf den gegenüberliegenden Seiten des Plattenheizkörpers 10 jeweils ein Luftpolster ergibt, das Wärmespeicher- und Isolierfunktionen beim Aufheizen und Heißhalten des Heizelements 4 bewirkt. Die Folienbespannung 9 bildet zumindest nach außen eine Antihaft-Fläche, um zu verhindern, dass Kunststoffmaterial der entsprechend plastifizierten Stirnfläche des jeweiligen Rohrendes an der Folienbespannung 9 haften bleibt. Die Folienbespannung 9 kann flexibel sein, so dass sie sich beim Anpressen des Heizelements 4 an eine entsprechende Stirnfläche des zu erhitzenden Rohrendes an die Oberfläche der Metallplatte M anlegt. Die Folienbespannung 9 ist zu diesem Zweck so hitzebeständig, dass sie durch ein Anliegen an der Oberfläche des aufgeheizten Plattenheizkörpers 10, d.h. an der Oberfläche der entsprechenden Metallplatte M, nicht beschädigt wird.

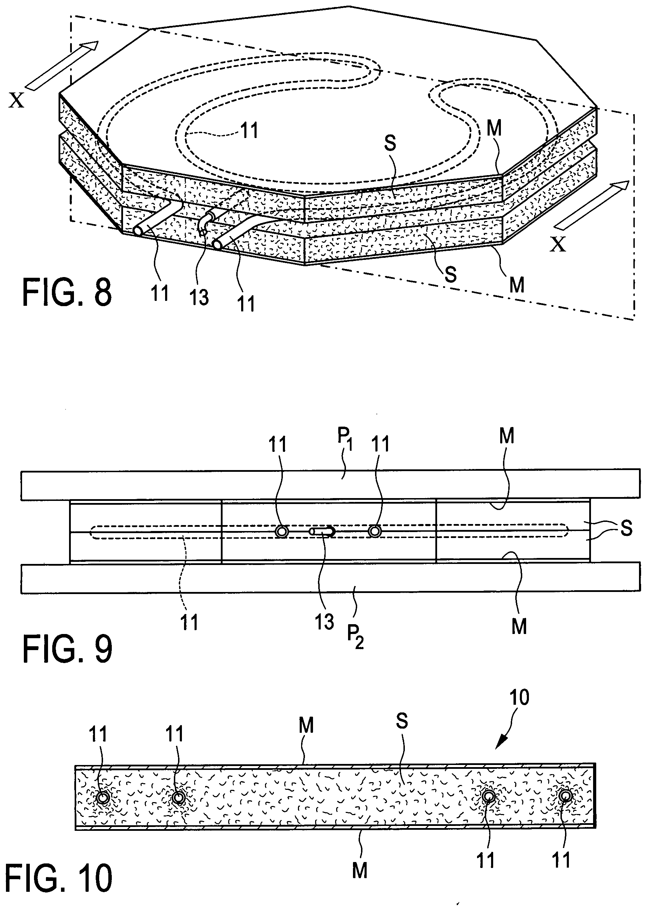

Zur Herstellung des Plattenheizkörpers 10 wird zunächst ein achteckiger Roh- oder Grundkörper R aus den beiden einander gegenüberliegenden Metallplatten M und einer materialschlüssig dazwischen befindlichen Metallschaumstruktur S geschaffen. Die Metallschaumstruktur S ist beim dargestellten Ausführungsbeispiel aus einer Aluminiumlegierung mit einem geeigneten Treibmittel hergestellt und über die gesamte Grundfläche des Grundkörpers R flächig mit den ebenfalls aus entsprechenden Aluminiumlegierungen hergestellten Metallplatten M vernetzt. Eine Dicke des Grundkörpers R einschließlich der Dicke der Metallplatten M und der Dicke der Metallschaumstruktur S ist etwas größer als die spätere Dicke des fertiggestellten Plattenheizkörpers 10 (siehe Fig. 10).

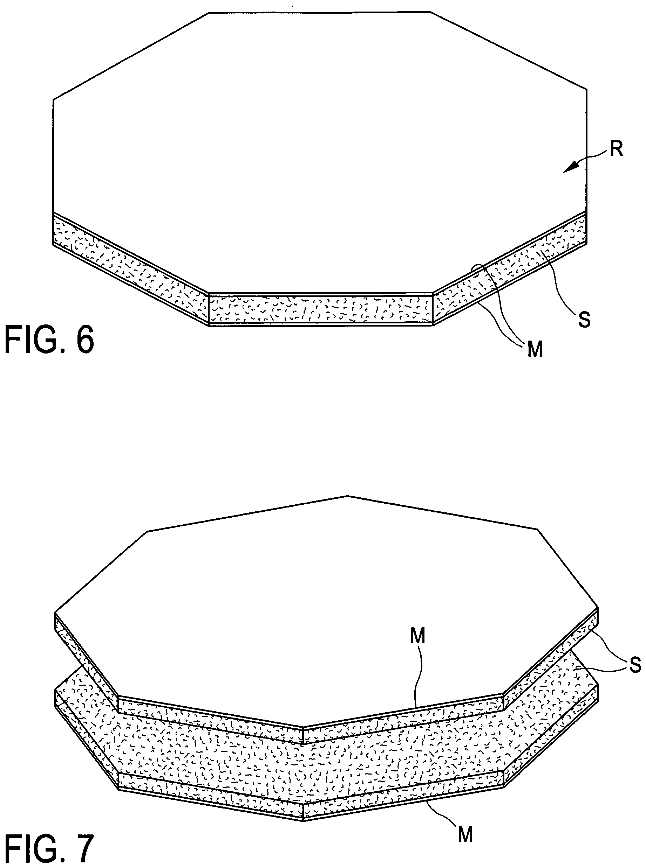

Dieser Grundkörper R wird in einem anschließenden Verfahrensschritt längs einer zu den Grundflächen der Metallplatten M parallelen Schnittebene geschnitten, so dass sich zwei zumindest weitgehend gleich dicke und voneinander getrennte Grundkörperhälften ergeben (siehe Fig. 7).

Anschließend wird gemäß Fig. 8 die elektrische Heizquelle, vorliegend in Form der Rohrheizschlange 11, zwischen die beiden Hälften des Grundkörpers R eingelegt. Zudem wird der Temperatursensor 13 in seiner entsprechenden Positionierung zwischen die beiden Hälften eingesetzt. Dieser Verfahrensschritt ist anhand der Fig. 8 erkennbar. Die elektrische Heizquelle in Form der Rohrheizschlange 11 wird an einen Stromkreis angeschlossen und bis auf etwa 600°C erhitzt. Zuvor wurde die Einheit aus den beiden Hälften des Grundkörpers R, der Rohrheizschlange 11 und dem Temperatursensor 13 zwischen zwei Presswerkzeuge P1, P2 eingefügt. Die entsprechenden Pressstempel P1, P2 werden zudem mit Temperatur beaufschlagt, indem sie auf etwa 400°C aufgeheizt werden. Aufgrund der Heiztemperatur der sich über die gesamte Grundfläche der Metallplatten M erstreckenden Rohrheizschlange 11 von etwa 600°C und den von beiden Seiten auf die Metallplatten M aufgebrachte Temperatur von etwa 400°C in Verbindung mit dem von beiden Seiten über die Presswerkzeuge P1, P2 aufgebrachten Druck werden die beiden Hälften des Grundkörpers mit ihrer offenen, von oben bzw. von unten her an der Rohrheizschlange 11 anliegenden Metallschaumstruktur S gegen diese gedrückt, so dass die Rohrheizschlange 11 sandwichartig zwischen die beiden Hälften eingedrückt wird. Aufgrund der hohen Temperaturen im Bereich der Rohrheizschlange 11 und im Bereich der Metallplatten M sowie der durch Wärmeleitung auch in die Metallschaumstruktur S eingebrachten Aufheizung wird die Metallschaumstruktur S insbesondere im Bereich der Trennebene, d.h. der Positionierungsebene der Rohrheizschlange 11, teigig, wodurch das Material der Metallschaumstruktur mit der Oberfläche der Rohrheizschlange 11, d.h. mit deren Außenkontur, gut vernetzt und sich im Bereich der Rohrheizschlange 11 verdichtet und diese umschließt. Anhand der Fig. 10 ist die Verdichtung der Metallschaumstruktur S im Bereich der Konturen der Rohrheizschlange 11 schematisch dargestellt. Gleichzeitig verschmelzen die einander zugewandten Trennflächen der Metallschaumstruktur S der oberen Hälfte und der unteren Hälfte des getrennten Grundkörpers R miteinander, so dass sich der über die gesamte Dicke materialeinheitliche Plattenheizkörper 10 ergibt. Die beiden Hälften sind nunmehr wieder über die gesamte Grundfläche fest miteinander verbunden und schließen die Rohrheizschlange 11 und den Temperatursensor 13 materialschlüssig ein. Der so gebildete Plattenheizkörper 10 gewährleistet eine sehr gute Wärmeleitung zwischen den Außenwandungen der Rohrheizschlange 11 und der Metallschaumstruktur S. Hierdurch ist mit relativ geringem Energieaufwand eine gute Aufheizung sowie ein gleichmäßiges Halten des Plattenheizkörpers 10 auf Temperatur gewährleistet. Durch die Metallschaumstruktur S ist zudem das Gewicht des Plattenheizkörpers 10 gegenüber einem aus Vollmaterial hergestellten Plattenheizkörper erheblich reduziert, wodurch die Handhabbarkeit des Plattenheizkörpers 10 und eines mit dem Plattenheizkörper 10 versehenen plattenförmigen Heizelements 4 für eine entsprechende Bedienperson erheblich vereinfacht ist.

Der Plattenheizkörper 10 wird nach dem Erkalten an seinem umlaufenden Randbereich, der die offene Metallschaumstruktur (S) zeigt, wasserdicht versiegelt.

## Patentansprüche

1. Kunststoffrohr-Stumpfschweißmaschine mit wenigstens einem Heizelement, das einen Plattenheizkörper (10) aufweist, in dem wenigstens eine elektrische Heizquelle (11) integriert ist, **dadurch gekennzeichnet dass** der Plattenheizkörper (10) eine Metallschaumstruktur (S) aufweist, in die die wenigstens eine elektrische Heizquelle (11) wärmeleitend eingebettet ist.

2. Heizelement für eine Kunststoffrohr-Stumpfschweißmaschine
mit einem Plattenheizkörper (10), in dem wenigstens eine elektrische Heizquelle (11) integriert ist, wobei der Plattenheizkörper (10) eine Metallschaumstruktur (S) aufweist, in die die wenigstens eine elektrische Heizquelle (11) wärmeleitend eingebettet ist, wobei einer Oberfläche jeder Metallplatte (M) des Plattenheizkörpers (10) eine Antihaft-Lage (9) zugeordnet ist, und wobei die Antihaft-Lage durch eine Folienbespannung (9) gebildet ist, die unter Belassung eines Luftspalts (L) parallel beabstandet zu der Oberfläche der jeweiligen Metallplatte (M) angeordnet ist.

3. Heizelement nach Anspruch 2, **dadurch gekennzeichnet, dass** die Metallschaumstruktur (S) an ihren gegenüberliegenden Grundflächen durch jeweils eine ebene Metallplatte (M) flankiert ist, die materialschlüssig mit der Metallschaumstruktur verbunden ist.

4. Heizelement nach Anspruch 2 oder 3, **dadurch gekennzeichnet, dass** die Metallschaumstruktur (S) sowie die beiden die Metallschaumstruktur (S) flankierenden Metallplatten (M) zueinander identische Grundflächen aufweisen und in Richtung einer Dicke des Plattenheizkörpers (10) miteinander fluchten.

5. Heizelement nach Anspruch 2, **dadurch gekennzeichnet, dass** die elektrische Heizquelle wenigstens eine Rohrheizschlange (11) oder wenigstens eine Heizpatrone umfasst, die formschlüssig und/oder materialschlüssig von der Metallschaumstruktur (S) umschlossen sind.

6. Heizelement nach Anspruch 5, **dadurch gekennzeichnet, dass** die wenigstens eine Rohrheizschlange in einer parallel zwischen den Metallplatten (M) erstreckten Ebene in der Metallschaumstruktur (S) verläuft.

7. Heizelement nach Anspruch 5 oder 6, **dadurch gekennzeichnet, dass** in die Metallschaumstruktur (S) wenigstens ein Temperatursensor (13) hineinragt.

8. Verfahren zur Herstellung eines Plattenheizkörpers (10) für ein Heizelement nach einem der Ansprüche 2 bis 7, wobei eine plattenartige Metallschaumstruktur (S) materialschlüssig an ihren gegenüberliegenden Stirnflächen mit zwei zueinander parallelen Metallplatten (M) verbunden wird, wobei anschließend die Einheit aus Metallschaumstruktur (S) und Metallplatten (M) in einer parallel zwischen den Metallplatten (M) verlaufenden Schnittebene in zwei Hälften getrennt wird, wobei anschließend eine elektrische Heizquelle in Form wenigstens einer Rohrheizschlange oder wenigstens einer Heizpatrone zwischen die beiden Hälften eingelegt wird, und wobei abschließend die beiden Hälften derart mit Druck und Temperatur beaufschlagt werden, dass sich die beiden Hälften an ihren Trennflächen materialschlüssig miteinander verbinden und die elektrische Heizquelle (11) zwischen sich einbetten.

9. Verfahren nach Anspruch 8, **dadurch gekennzeichnet, dass** die elektrische Heizquelle nach dem Einlegen zwischen die beiden Hälften auf eine Temperatur aufgeheizt wird, die einer Plastifizierungstemperatur für die Metallschaumstruktur entspricht.

10. Verfahren nach Anspruch 8, **dadurch gekennzeichnet, dass** ein umlaufender Randbereich der Metallschaumstruktur (S) wasserdicht versiegelt wird.

## Claims

1. Plastic-tube butt-welding machine having at least one heating element which has a plate-type radiator (10) in which at least one electric heat source (11) is integrated, **characterized in that** the plate-type radiator (10) comprises a metallic foam structure (S) in which the at least one electric heat source (11) is embedded in a heat-conducting manner.

2. Heating element for a plastic-tube butt-welding machine having a plate-type radiator (10) in which at least one electric heat source (11) is integrated, wherein the plate-type radiator (10) comprises a metallic foam structure (S) in which the at least one electric heat source (11) is embedded in a heat-conducting manner, wherein a surface of each metal plate (M) of the plate-type radiator (10) is assigned a non-stick layer (9), and wherein the non-stick layer is formed by a film covering (9) which, while allowing an air gap (L), is disposed so as to be spaced apart from and in parallel with the surface of the respective metal plate (M).

3. Heating element according to claim 2, **characterized in that** the metallic foam structure (S), on its base areas lying opposite one another, is flanked in each case by one planar metal plate (M) which is connected in a materially integral manner to the metallic foam structure.

4. Heating element according to claim 2 or 3, **characterized in that** the metallic foam structure (S) and the two metal plates (M) which flank the metallic foam structure (S) display base areas which are identical to one another and, in the direction of a thickness of the plate-type radiator (10), are aligned with one another.

5. Heating element according to claim 2, **characterized in that** the electric heat source comprises at least one tubular heating coil (11) or at least one heating cartridge, enclosed in a form-fitting and/or materially integral manner by the metallic foam structure (S).

6. Heating element according to claim 5, **characterized in that** the at least one tubular heating coil, in the metallic foam structure (S), runs in a plane which extends in a parallel manner between the metal plates (M).

7. Heating element according to claim 5 or 6, **characterized in that** at least one temperature sensor (13) protrudes into the metallic foam structure (S).

8. Method for manufacturing a plate-type radiator (10) for a heating element according to any of claims 2 to 7, wherein a plate-type metallic foam structure (S), on its end faces lying opposite one another, is connected in a materially integral manner to two metal plates (M) which are parallel to one another, wherein subsequently the unit consisting of metallic foam structure (S) and metal plates (M), in a sectional plane which runs parallel between the metal plates (M), is severed into two halves, wherein subsequently an electric heat source in the form of at least one tubular heating coil or at least one heating cartridge is inserted between the two halves, and wherein finally the two halves are impinged in such a manner with pressure and temperature that the two halves, on their separation faces, connect to one another in a materially integral manner and embed the electric heat source (11) between them.

9. Method according to claim 8, **characterized in that** the electric heat source, after insertion between the two halves, is heated to a temperature which corresponds to a plasticization temperature for the metallic foam structure.

10. Method according to claim 8, **characterized in that** an encircling peripheral region of the metallic foam structure (S) is sealed so as to be watertight.

## Revendications

1. Machine de soudage bout à bout de tuyaux en plastique avec au moins un élément chauffant comportant un corps de chauffe à plaques (10), dans lequel au moins une source de chaleur électrique (11) est intégrée, **caractérisée en ce que**
le corps de chauffe à plaques (10) comporte une structure en mousse métallique (S), dans laquelle l'au moins une source de chaleur électrique (11) est incorporée de façon à conduire la chaleur.

2. Élément chauffant pour une machine de soudage bout à bout de tuyaux en plastique avec un corps de chauffe à plaques (10), dans lequel au moins une source de chaleur électrique (11) est intégrée, le corps de chauffe à plaques (10) comportant une structure en mousse métallique (S), dans laquelle l'au moins une source de chaleur électrique (11) est incorporée de façon à conduire la chaleur, dans lequel une couche anti-adhérente (9) est affectée à une surface de chacune des plaques métalliques (M) du corps de chauffe à plaques (10), et dans lequel la couche anti-adhérente est formée par une pellicule d'habillage (9) disposée en parallèle et espacée de la surface de la plaque métallique (M) respective, tout en laissant une lame d'air (L).

3. Élément chauffant selon la revendication 2, **caractérisé en ce que** la structure en mousse métallique (S), sur chacune de ses superficies de base opposées, est flanquée par une plaque métallique (M) plane respective, qui est connectée à la structure en mousse métallique en liaison par complémentarité de matières.

4. Élément chauffant selon la revendication 2 ou 3, **caractérisé en ce que** la structure en mousse métallique (S) ainsi que les deux plaques métalliques (M) flanquant la structure en mousse métallique (S) présentent des superficies de base identiques et sont alignées l'une à l'autre dans la direction d'une épaisseur du corps de chauffe à plaques (10).

5. Élément chauffant selon la revendication 2, **caractérisé en ce que** la source de chaleur électrique comporte au moins un serpentin chauffant tubulaire (11) ou au moins une cartouche chauffante, entourés par la structure en mousse métallique (S) en liaison par complémentarité de formes et/ou en liaison par complémentarité de matières.

6. Élément chauffant selon la revendication 5, **caractérisé en ce que** l'au moins un serpentin chauffant tubulaire passe dans la structure en mousse métallique (S) dans un plan s'étendant en parallèle entre les plaques métalliques (M).

7. Élément chauffant selon la revendication 5 ou 6, **caractérisé en ce qu'**au moins un capteur de température (13) avance dans la structure en mousse métallique (S).

8. Procédé de fabrication d'un corps de chauffe à plaques (10) pour un élément chauffant selon l'une des revendications 2 à 7, dans lequel une structure en mousse métallique (S) de type plaque, sur ses faces frontales opposées, est connectée avec deux plaques métalliques (M) parallèles l'une à l'autre, dans lequel ensuite l'unité de structure en mousse métallique (S) et plaques métalliques (M) est sectionnée en deux moitiés dans un plan de coupe s'étendant en parallèle entre les plaques métalliques (M), dans lequel ensuite une source de chaleur électrique sous forme d'au moins un serpentin chauffant tubulaire ou au moins une cartouche chauffante est insérée entre les deux moitiés, et dans lequel finalement une pression et une température sont appliquées sur les deux moitiés de telle sorte que les deux moitiés se connectent l'une à l'autre sur les surfaces de découpe en liaison par complémentarité de matières et en incorporant la source de chaleur électrique (11) entre elles.

9. Procédé selon la revendication 8, **caractérisé en ce qu'**après l'insertion entre les deux moitiés la source de chaleur électrique est chauffée à une température correspondant à une température de plastification pour la structure en mousse métallique.

10. Procédé selon la revendication 8, **caractérisé en ce qu'**une zone de bord périphérique de la structure en mousse métallique (S) est scellée de façon à être étanche à l'eau.
